# EUROPÄISCHE PATENTSCHRIFT

(11) **EP 3 150 428 B1**
(45) Veröffentlichungstag und Bekanntmachung des Hinweises auf die Patenterteilung: **11.12.2019**
(21) Anmeldenummer: 16189043.9
(22) Anmeldetag: 15.09.2016
(51) Int. Cl.: B60P 3/07, B60P 3/12, B62D 21/14

(54) **TRANSPORTFAHRZEUG FÜR KRAFTFAHRZEUGE MIT VERÄNDERBARER TRANSPORTFLÄCHE UND VERFAHREN ZUM BELADEN EINES SOLCHEN TRANSPORTFAHRZEUGES**
TRANSPORT VEHICLE FOR MOTOR VEHICLES WITH VARIABLE TRANSPORT SURFACE AND METHOD FOR LOADING SUCH A TRANSPORT VEHICLE
VÉHICULE DE TRANSPORT DE VÉHICULES AUTOMOBILES AVEC SURFACE DE TRANSPORT MODIFIABLE ET PROCÉDÉ DE CHARGEMENT D'UN TEL VÉHICULE DE TRANSPORT

(30) Priorität: 30.09.2015 DE 202015105169 U
(43) Veröffentlichungstag der Anmeldung: 05.04.2017
(73) Patentinhaber: Kuvvetli, Sami, 93437 Furth i. Wald (DE)
(72) Erfinder: Kuvvetli, Sami, 93437 Furth i. Wald (DE)
(74) Vertreter: Benninger, Johannes

(56) Entgegenhaltungen:
- EP-A1- 2 689 957
- WO-A1-87/01341
- WO-A1-2012/071885
- GB-A- 2 463 897
- US-A1- 2013 149 084

## Beschreibung

Die vorliegende Erfindung betrifft ein Transportfahrzeug zur Beförderung von rollbaren Gütern oder Fahrzeugen, insbesondere von Kraftfahrzeugen, Personenkraftwagen o.dgl., gemäß den Merkmalen des unabhängigen Anspruches 1. Die Erfindung betrifft zudem ein Verfahren zum Beladen eines solchen Transportfahrzeuges mit den Merkmalen des unabhängigen Verfahrensanspruchs 13.

Die WO 2012/071885 A1 offenbart ein Transportfahrzeug mit mindestens drei an einem Fahrgestell des Transportfahrzeugs angeordneten Achsen, mit einem frontseitig oberhalb einer lenkbaren Vorderachse angeordneten Führerhaus, wobei das Fahrgestell Verstellmittel zur Verstellung einer Distanz zwischen einer Mittelachse des Transportfahrzeuges und wenigstens einer Hinterachse aufweist.

Transportfahrzeuge, die für den Transport einzelner oder mehrerer Personenkraftfahrzeuge vorgesehen und geeignet sind, sind in unterschiedlichen Ausführungsvarianten bekannt und werden meist pauschal als Autotransporter bezeichnet. Eine typische Variante solcher Transportfahrzeuge weist zwei oder drei Achsen, ein frontseitig oberhalb einer lenkbaren Vorderachse angeordnetes Führerhaus sowie einen dahinter angeordneten Transportbereich mit einer Plattform zur Aufnahme mindestens eines Fahrzeuges auf. Für einen Transport von einem Kraftfahrzeug oder auch von zwei Kraftfahrzeugen werden meist Transportfahrzeuge genutzt, welche speziell für einen Transport von einem Fahrzeug oder von zwei Kraftfahrzeugen ausgelegt sind. Insbesondere für die Bergung und den Transport von Unfallfahrzeugen, welche bspw. auf Schnellstraßen, Autobahnen oder sonstigen Straßen verunglückt sind, werden derartige kleinere Autotransporter mit geringer Ladekapazität eingesetzt, um in beengten Verkehrssituationen einfacher und schneller zur Unfallstelle gelangen zu können, bzw. um einen zügigen Abtransport der Unfallfahrzeuge zu ermöglichen.

Es sind bereits Transportfahrzeuge bekannt, bei welchen die Auflagefläche des Transportbereichs teleskopisch vergrößert und/oder ausgeschwenkt werden kann, um eine Laderampe zur Beladung des Transportfahrzeugs zu erschaffen. Die Auflagefläche kann dabei in einer Weise erweitert werden, dass auch Fahrzeuge mit einer geringen Bodenfreiheit auf das Transportfahrzeug befördert werden können. Ein derartiges Transportfahrzeug wird bspw. durch die DE 689 05 892 T2 beschrieben. Dieses Dokument ist als nächstliegender Stand der Technik gegenüber dem Gegenstand der Ansprüche 1 und 13 anzusehen.

Weiterhin sind Transportfahrzeuge bekannt, welche zur Aufnahme eines Kraftfahrzeugs auf einer Transportfläche geeignet sind, und zusätzlich eine Transporteinrichtung umfassen, mittels welcher ein weiteres Fahrzeug zum Abtransport am Heck des Transportfahrzeugs angebunden werden kann, wie dies etwa in der US 6 402 457 B1 oder in der US 4 795 303 A offenbart wird.

Aus Folge eines Unfalls mit zwei oder mehreren Fahrzeugen resultieren oftmals mehr oder weniger beschädigte und damit meist nicht mehr fahrbereite Fahrzeuge. Ein Fahrzeug, welches nur geringere Beschädigungen aufweist, kann oftmals trotz des Schadens weiterhin rangierfähig sein, so dass ein Abtransport auf der Auflagefläche eines Fahrzeugtransporters nicht zwingend notwendig ist. In solchen Fällen kann das Unfallfahrzeug an einer Transporteinrichtung am Heck des Transportfahrzeugs angebunden werden, um es hinter dem Transportfahrzeug nachziehen zu können. Ein weiteres Unfallfahrzeug, welches möglicherweise größere Schäden aufweist, die zu einer Rangierunfähigkeit des Unfallfahrzeugs führen, kann bspw. auf der Auflagefläche des Fahrzeugtransporters abtransportiert werden. Zur Positionierung eines bewegungsuntüchtigen Unfallfahrzeugs ist es oftmals vorteilhaft, wenn der Fahrzeugtransporter über einen integrierten Bergekran verfügt, was dazu führt, dass zur Umsetzung des Unfallfahrzeugs von der Unfallstelle auf den Fahrzeugtransporter kein zusätzliches Bergefahrzeug benötigt wird.

In solchen Fällen allerdings, bei welchen aus einer Unfallsituation zwei Unfallfahrzeuge resultieren, die nach dem Unfall rangierunfähig sind, kann ein Fahrzeugtransporter, welcher lediglich über eine Ladefläche zum Transport eines Fahrzeugs verfügt, oder im gegebenen Fall nur eine zusätzliche heckseitige Abschleppvorrichtung umfasst, die beiden rangierunfähigen Kraftfahrzeuge nicht alleine abtransportieren. Es muss ein zusätzliches Transportfahrzeug angefordert werden, wodurch sich die Zeitspanne bis zu einer kompletten Räumung der Unfallstelle und die erwünschte Wiederfreigabe der Straße/Fahrbahn verlängert, da wiederum Anforderungs-, Anfahrts- und Positionierungszeiten für das zweite Transportfahrzeug anfallen.

Auch der Einsatz eines Fahrzeugtransporters, welcher über eine Ladefläche zum Transport zweier Unfallfahrzeuge verfügt, bereitet oftmals Schwierigkeiten. Derartige Transportfahrzeuge sind gewöhnlich sehr unflexibel, besitzen einen großen Wendekreis und benötigen viel Platz, um rangieren zu können. Da in vielen Fällen die Autobahn oder eine sonstige Straße nach einem Unfall beengte Zustände aufweist, oder auch ein dichter Stau aufgrund nachfolgender weiterer Fahrzeuge entsteht, welcher die Anfahrt des Fahrzeugtransporters behindert, ist ein derartiges Transportfahrzeug oftmals nicht sinnvoll einsetzbar.

Das vorrangige Ziel der vorliegenden Erfindung wird daher darin gesehen, ein Transportfahrzeug für rollbare Güter oder Fahrzeuge, insbesondere Kraftfahrzeuge, Personenkraftwagen o.dgl., zur Verfügung zu stellen, welches eine flexible Ladekapazität für ein bis zwei Kraftfahrzeuge aufweist, welche rangierunfähig oder auch fahrtüchtig sein können, dabei aber bestimmte Maximalabmessungen und Gesamtgewichte nicht überschreitet. Weiterhin soll das Transportfahrzeug eine einfache Rangierbarkeit aufweisen und einen engen Wendekreis besitzen, wodurch ein flexibler Einsatz des Transportfahrzeugs ermöglicht werden soll.

Die genannten Ziele der Erfindung werden mit dem Gegenstand des unabhängigen Anspruchs erreicht. Merkmale vorteilhafter Ausgestaltungen und Weiterbildungen der Erfindung werden durch die Unteransprüche beschrieben und finden sich in der nachfolgenden Beschreibung sowie den zugehörigen Zeichnungen.

Die Erfindung schlägt zur Erreichung des genannten Ziels ein Transportfahrzeug zur Beförderung von rollbaren Gütern oder Fahrzeugen, insbesondere von Kraftfahrzeugen, Personenkraftwagen o.dgl., mit mindestens drei an einem Fahrgestell eines Zugfahrzeugs angeordneten Achsen mit den Merkmalen des unabhängigen Anspruchs 1 vor. Das erfindungsgemäße Transportfahrzeug weist ein frontseitig oberhalb einer lenkbaren Vorderachse angeordnetes Führerhaus sowie einen zumindest teilweise auf dem Fahrgestell des Transportfahrzeugs üblicherweise starr angeordneten Transportbereich auf. Der Transportbereich umfasst eine Aufnahmefläche zum Transport eines zu transportierenden Fahrzeugs, bspw. eines Kraftfahrzeugs. Dem Transportbereich ist heckseitig wenigstens eine Hinterachse zur Lastabstützung zugeordnet. Außerdem ist das Transportfahrzeug mit einer vorzugsweise angetriebenen Mittelachse ausgestattet. Üblicherweise weisen die Vorderachse und Mittelachse eine geringere Distanz auf als die Mittelachse und Hinterachse, um eine ideale Achslastverteilung in einem beladenen Zustand des Transportfahrzeugs zu erhalten. Das Fahrgestell des Transportfahrzeugs weist außerdem Verstellmittel für eine Veränderung der Distanz zwischen der Mittelachse und der Hinterachse auf.

Bei dem Verstellmittel zur Veränderung der Distanz zwischen der Mittelachse und der Hinterachse kann es sich bspw. um ein teleskopierbares Verstellmittel handeln. Vorzugsweise sind zur Verstellung teleskopierbare Rahmenabschnitte des Transpostfahrzeugs vorgesehen. Durch eine teleskopierbare Ausgestaltung können die Verstellmittel zur Verstellung des Fahrgestells relativ kompakt und platzsparend aufgebaut werden. Denkbar ist auch eine Verwendung von übereinander schiebbaren Verstellmitteln. In einem komplett zusammengeschobenen Zustand der Verstellmittel des Fahrgestells weisen die Mittelachse und Hinterachse eine minimale Distanz zueinander auf. In diesem Fall ist das Transportfahrzeug zur Aufnahme von lediglich einem Kraftfahrzeug in der Lage. In einem komplett auseinandergeschobenen Zustand der Verstellmittel des Fahrgestells weisen die Mittelachse und Hinterachse eine maximale Distanz zueinander auf. Weiterhin können die Mittelachse und die Hinterachse auch auf eine mittlere Distanz zueinander eingestellt werden. Einhergehend mit einer Verstellung der Distanz zwischen der Mittelachse und Hinterachse kann eine Verstellung der Auflagefläche des Transportbereichs vorgenommen werden. Die Verstellung der Auflagefläche des Transportbereichs erfolgt bspw. ebenfalls mittels teleskopierbarer Verstellmittel. Weiterhin ist denkbar, die Auflagefläche aus mehreren übereinander verschiebbaren Einzelplatten auszubilden, um eine Verstellbarkeit der Auflagefläche zu realisieren. Die auf dem Fahrgestell angeordnete Auflagefläche kann in einem komplett zusammengeschobenen Zustand eine minimale Auflagefläche zur Aufnahme eines einzelnen Kraftfahrzeuges bilden. Bei einer Einstellung einer maximalen Größe der Auflagefläche können bis zu zwei Kraftfahrzeuge transportiert werden. Die Auflagefläche kann auch auf eine mittlere Größe eingestellt werden, um bspw. die Aufnahme eines großen Kraftfahrzeugs oder eines kleinen Tansportbusses zu ermöglichen. Üblicherweise umfasst das Transportfahrzeug in einem komplett auseinandergeschobenen Zustand des Fahrgestells bzw. der Auflagefläche eine maximale Länge von bis zu 10 Metern oder mehr, wodurch bereits mit Besitz der europäischen Fahrerlaubnisklasse C1, bzw. der ehemaligen Klasse 3 der deutschen Regelung bis zum Jahr 1998, eine Fahrerlaubnis für ein derartiges Transportfahrzeug vorliegt. Das Transportfahrzeug kann auch eine maximale Länge von mehr als 12 Metern aufweisen. In diesem Fall ist allerdings eine höhere Fahrerlaubnisklasse für eine Fahrerlaubnis des Transportfahrzeugs notwendig.

Die Verstellung der Auflagefläche des Transportbereichs kann an eine Verstellung der Distanz zwischen der Mittelachse und der Hinterachse mittels der teleskopischen Verstellmittel, insbesondere mittels der teleskopierbaren Rahmenabschnitte, gekoppelt sein. Auf diese Weise ist bei einer Koppelung des Verstellmittels des Fahrgestells mit dem Verstellmittel der Auflagefläche des Transportbereichs die Fläche der Auflagefläche automatisch und einhergehend mit der Verstellung des Fahrgestells einstellbar. Neben einer automatischen Anpassung der Auflagefläche ist auch denkbar, eine unabhängige und manuelle Verstellung zu ermöglichen. Eine manuelle Verstellung kann bspw. in einem Fall vorteilhaft sein, in welchem eine Veränderung der Distanz zwischen der Mittelachse und der Hinterachse nicht notwendig ist, aber die Größe des Transportbereichs zur Beladung des Transportfahrzeugs mit einem größeren Kraftfahrzeug noch nicht ausreicht.

Erfindungsgemäß ist die Auflagefläche des Transportbereichs gegenüber dem Fahrgestell verstellbar und/oder verschiebbar und/oder verschwenkbar ausgebildet. Hierbei besteht die Möglichkeit, die Auflagefläche des Transportbereichs derartig zu verstellen und/oder zu verschieben und/oder zu verschwenken, dass eine Laderampe zur Befahrung des Transportbereichs entsteht, um den Transportbereich des Transportfahrzeugs mit fahrtauglichen Kraftfahrzeugen beladen zu können. Zu diesem Zweck kann die Auflagefläche des Transportbereichs verschiebbar auf einem Tragrahmen angeordnet sein, welcher über eine Schwenkachse an dem Fahrgestell befestigt ist. Mit Hilfe des Tragrahmens kann die Auflagefläche derartig nach hinten verschoben bzw. nach oben verschwenkt werden, sodass Heckseitig am Transportfahrzeug eine befahrbare Laderampe entsteht. Um den Neigungswinkel zwischen der Laderampe und der Straße oder dem Boden zu verändern, kann die Auflagefläche derartig vergrößert bzw. verschwenkt werden, dass sich der Neigungswinkel der Laderampe verringert und die Laderampe auch für Kraftfahrzeuge mit niedriger Bodenfreiheit befahrbar ist.

Für eine Beladung des Transportfahrzeugs mit einem Kraftfahrzeug kann das Transportfahrzeug erfindungsgemäß zudem einen Bergekran umfassen. Üblicherweise umfassen erfindungsgemäße Transportfahrzeuge, welche eine Zulassung von bis zu 7,5 Tonnen aufweisen, einen Bergekran. Für Transportfahrzeuge, die bspw. lediglich eine Zulassung von bis zu 3,5 Tonnen besitzen, ist auch ein Verzicht auf einen Bergekran denkbar. Der Bergekran weist für gewöhnlich ein großes Gewicht auf, wodurch sich das Gewicht der zulässigen Beladung einschränkt. Mittels des Bergekrans können insbesondere rangierunfähige Kraftfahrzeuge auf den Transportbereich des Transportfahrzeugs gehoben werden.

Vorteilhaft an einer derartigen Ausgestaltung eines Transportfahrzeugs ist die situationsbedingte Verstellbarkeit der Fahrzeuglänge bzw. der Distanz zwischen der Mittelachse und der Hinterachse, sowie der Größe des Transportbereichs. Da insbesondere bei Unglücksfällen auf Autobahnen oder sonstigen Straßen, bspw. mit zwei oder mehr verunglückten Kraftfahrzeugen, aufgrund von sich zurückstauenden folgenden Fahrzeugen ein beengter Anfahrtsbereich entsteht und oftmals beengte und eingeschränkte Rangiermöglichkeiten an der Unfallstelle auftreten, kann das Transportfahrzeug für die Anfahrt oder das Rangieren an der Unfallstelle in einem auf eine minimale Fahrzeuglänge zusammengeschobenen Zustand bewegt werden. An der Unfallstelle kann das Transportfahrzeug an die Gegebenheiten der verunglückten Kraftfahrzeuge angepasst werden. Innerhalb kurzer Zeit ist das Fahrgestell bzw. die Auflagefläche des Transportfahrzeugs derartig einstellbar, dass eine Beladung des Transportbereichs mit zwei Kraftfahrzeugen ermöglicht werden kann. Das Fahrgestell bzw. die Auflagefläche kann dabei auf eine maximale Länge bzw. Fläche oder auf ein Mittelmaß auseinander geschoben werden. Durch die Transport- bzw. Belademöglichkeit von bis zu zwei Kraftfahrzeugen kann eine zügige Räumung der Autobahn ermöglicht werden, um die Straße schnell für den nachfolgenden Verkehr frei geben zu können.

Erfindungsgemäß ist der Transportbereich starr mit dem Fahrgestell des Zugfahrzeugs verbunden. Der Antrieb des Transportfahrzeugs kann über die antreibbare Mittelachse erfolgen. Sinnvollerweise können die Reifen der angetriebenen Mittelachse, welche typischerweise als Starrachse mit Mitteldifferenzial ausgebildet ist, sowie die Reifen der Hinterachse einen kleineren Durchmesser als die Reifen der Vorderachse besitzen, um die Transporthöhe des Transportfahrzeugs möglichst niedrig zu halten. Die Hinterachse des Transportfahrzeugs kann ebenfalls als Starrachse ausgebildet sein. Eine Ausgestaltung der Hinterachse als eine Zwillingsachse ist ebenfalls denkbar, wodurch der Einsatz kleinerer Reifen vereinfacht wird. Zudem kann aufgrund der Zwillingsachse eine höhere Achslast ermöglicht werden. Statt einer Zwillingsachse kann auch eine Doppelachse vorhanden sein. Weiterhin ergibt sich eine größere Fahrstabilität des Transportfahrzeugs, was insbesondere bei einem beladenen Transportfahrzeug vorteilhaft ist.

Idealerweise kann es sich bei der Hinterachse auch um eine lenkbare Achse handeln. Eine derartig lenkbare Hinterachse kann wahlweise eine aktive Lenkung aufweisen, die mit der lenkbaren Vorderachse in einer Weise gekoppelt ist, dass ein gegensinniger Lenkeinschlag gegeben ist, mit dessen Hilfe eine effektive Reduzierung des Wendekreises des Transportfahrzeugs und eine einfache Rangierfähigkeit des Transportfahrzeugs realisiert werden kann. Es ist leicht ersichtlich, dass eine gegensinnige Lenkung der Hinterräder zur Vermeidung von straken Verspannungen fast unverzichtbar ist, da die Hinterachse, zumindest bei einer maximalen Distanz zwischen der Mittelachse und der Hinterachse, relativ weit von der Mittelachse beabstandet ist. Bei einer nicht lenkbaren Mittelachse und einer ungelenkten Hinterachse würde eine Kurvenfahrt stark erschwert. Bei einer ungelenkten Hinterachse wäre eine gleichsinnig zur Vorderachse mitlenkende Mittelachse fast unverzichtbar, damit Kurvenfahrten ohne starke Materialbelastungen ermöglicht würden. Wahlweise kann die Hinterachse bspw. eine hydraulische oder elektromotorisch betriebene Lenkung aufweisen, die mit der gelenkten Vorderachse gekoppelt ist. Ebenso möglich ist jedoch auch eine passive Hinterachslenkung, die mittels einer geeigneten Achsgeometrie in einer Weise realisierbar ist, dass durch die bei der Kurvenfahrt auftretenden Querkräfte ein gegensinniger Lenkeinschlag der Hinterräder zu den gelenkten Vorderrädern erzeugt wird. Es ist auch denkbar, die Lenkbarkeit der Hinterachse an eine Mindestdistanz zwischen der Mittelachse und der Hinterachse zu koppeln, um je nach Betriebssituation eine geeignete Lenkung des Transportfahrzeugs zu ermöglichen.

Weiterhin schlägt die vorliegende Erfindung zur Erreichung der oben genannten Ziele ein Verfahren zum Beladen eines Transportfahrzeugs mit den Merkmalen des unabhängigen Verfahrensanspruchs vor. Das Verfahren bezieht sich dabei auf ein Transportfahrzeug, welches zur Beförderung von rollbaren Gütern oder Fahrzeugen, insbesondere Kraftfahrzeugen, Personenkraftwagen oder dgl. vorgesehen ist. Das Transportfahrzeug weist mindestens drei an einem Fahrgestell angeordnete Achsen auf, ein frontseitig oberhalb einer lenkbaren Vorderachse angeordnetes Führerhaus sowie einem zumindest teilweise dem Fahrgestell zugeordneten Transportbereich mit einer Auflagefläche für die zu transportierenden rollbaren Güter oder Fahrzeuge. Das Fahrgestell weist Verstellmittel zur Verstellung einer Distanz zwischen einer Mittelachse des Transportfahrzeugs und wenigstens einer Hinterachse auf. Das erfindungsgemäße Beladeverfahren umfasst zumindest die nachfolgend genannten Schritte:
- Vergrößern der Distanz zwischen der Mittelachse und der wenigstens einen Hinterachse des Transportfahrzeugs mittels Ausfahren teleskopierbarer Verstellmittel des Fahrgestells,
- Vergrößern der Auflagefläche des Transportbereichs mittels Ausfahren teleskopierbarer Verstellmittel,
- Verschieben der Auflagefläche des Transportbereichs nach hinten sowie nach hinten Kippen der Auflagefläche zur Bildung einer Laderampe,
- Auffahren zu transportierender rollbarer Güter oder Fahrzeuge auf die Laderampe,
- Zurückschwenken der Auflagefläche des Transportbereichs in eine horizontale Ausgangsposition und Zurückbewegen der Auflagefläche in eine ursprüngliche Lagerposition.

Weiterhin kann das genannte Verfahren eine Koppelung der Vergrößerung der Distanz zwischen der Mittelachse und der Hinterachse mittels der teleskopierbaren Verstellmittel und der Vergrößerung der Auflagefläche des Transportbereichs mittels teleskopierbarer Verstellmittel genutzt werden, sodass die Vergrößerung des Fahrgestells mit der Vergrößerung der Auflagefläche einhergeht.

Die im Zusammenhang mit dem erfindungsgemäßen Transportfahrzeug genannten Ausführungsvarianten des Transportfahrzeugs können selbstverständlich auch für das Transportfahrzeug des erfindungsgemäßen Beladeverfahrens gelten. Daher wird auf eine erneute Darlegung der Ausführungsformen verzichtet und auf die bereits beschriebenen Ausführungen verwiesen.

Im Folgenden sollen Ausführungsbeispiele die Erfindung und ihre Vorteile anhand der beigefügten Figuren näher erläutern. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind.
Fig. 1 zeigt eine schematische Seitenansicht einer Ausführungsvariante eines erfindungsgemäßen Transportfahrzeugs.
Fig. 2 zeigt eine schematische Ansicht des eine Laderampe bildenden Transportfahrzeugs.
Fig. 3 zeigt eine schematische Seitenansicht des beladenen Transportfahrzeugs mit Zwillingsachse.
Fig. 4 zeigt eine schematische Ansicht des Transportfahrzeugs mit teleskopiertem Fahrgestell.
Fig. 5 zeigt eine schematische Ansicht eines Transportfahrzeugs mit tiefer Ladeebene.
Fig. 6 zeigt eine schematische Ansicht eines mit einem Kleintransporter beladenen Transportfahrzeugs.
Fig. 7a bis 7f zeigen die einzelnen Schritte eines erfindungsgemäßen Beladeverfahrens.

Für gleiche oder gleich wirkende Elemente der Erfindung werden identische Bezugszeichen verwendet. Ferner werden der Übersicht halber nur Bezugszeichen in den einzelnen Figuren dargestellt, die für die Beschreibung der jeweiligen Figur erforderlich sind. Die dargestellten Ausführungsformen stellen lediglich Beispiele dar, wie die erfindungsgemäße Vorrichtung ausgestaltet sein kann und stellen keine abschließende Begrenzung dar.

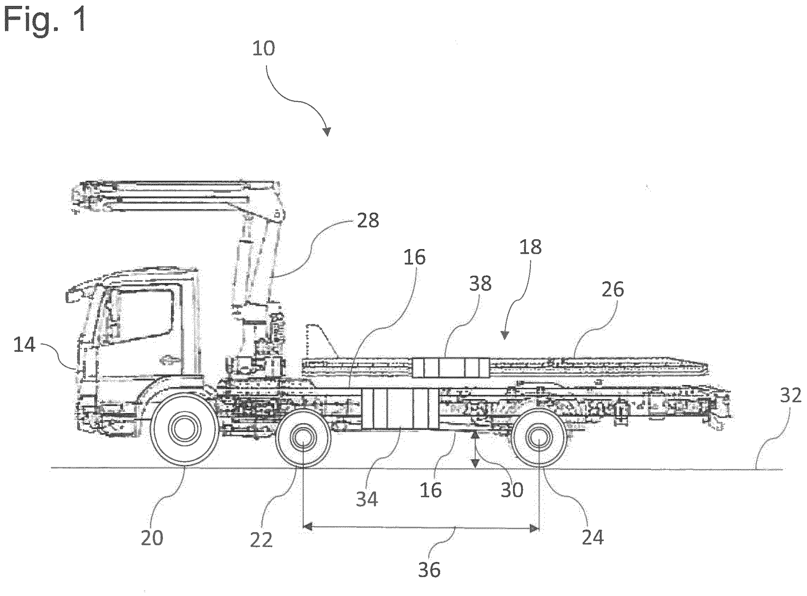

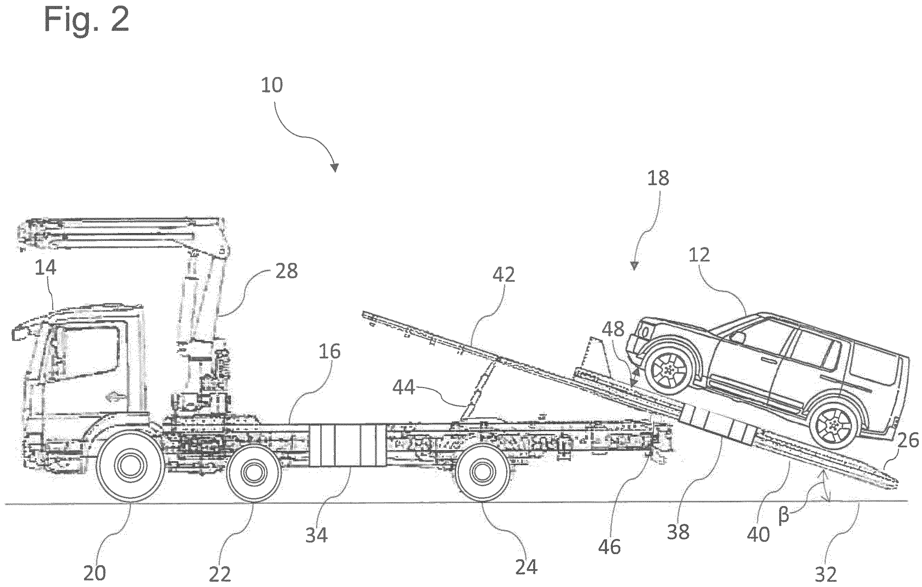

Die Fig. 1 zeigt eine schematische Seitenansicht einer Ausführungsvariante eines erfindungsgemäßen Transportfahrzeugs 10. Bei dem Transportfahrzeug 10 handelt es sich um ein Fahrzeug, das für einen Transport von Kraftfahrzeugen 12 (vgl. Fig. 2 ff.) vorgesehen und ausgestattet ist. Frontseitig und zumindest teilweise oberhalb der Vorderachse 20 ist ein Führerhaus 14 angeordnet, von welchem aus das Transportfahrzeug 10 sowie ggf. mehrere dem Transportfahrzeug 10 zugeordnete Einrichtungen bedient werden können. Durch diese charakteristische Anordnung des Führerhauses 14 ist eine sog. Frontlenkerbauweise des Transportfahrzeuges 10 definiert. Hinter dem bzw. unterhalb des Führerhauses 14 weist das Transportfahrzeug 10 ein Fahrgestell 16 auf. Hinter dem Führerhaus 14 befindet sich auf dem Fahrgestell 16 ein Transportbereich 18, welcher eine Auflagefläche 26 zur Aufnahme mindestens eines Kraftfahrzeugs 12 umfasst. Eine in Fahrtrichtung hinter der Vorderachse 20 angeordnete Mittelachse 22 sowie eine im Heckbereich befindliche Hinterachse 24 sind zumindest teilweise im Bereich des Transportbereichs 18 unterhalb des Fahrgestells 16 angeordnet. Die Reifen der Mittelachse 22 und Hinterachse 24 weisen üblicherweise einen geringeren Durchmesser auf als die Reifen der Vorderachse 20, wodurch der Transportbereich 18 etwas tiefer gesetzt werden kann, was einen fahrdynamisch vorteilhaften niedrigeren Schwerpunkt bewirkt, insbesondere bei beladenem Transportfahrzeug 10. Im Bereich zwischen der Vorderachse 20 und der Mittelachse 22, hinter dem Führerhaus 14 und vor der Auflagefläche 26 ist ein Bergekran 28 zur Bergung von Kraftfahrzeugen 12 angeordnet.

Idealerweise beträgt der Abstand 30 zwischen einer Unterseite des Fahrgestells 16 und dem Boden 32 und damit die Bodenfreiheit in diesem Bereich zwischen 250 und 300 Millimeter. Zur Vergrößerung der horizontalen Distanz zwischen der Mittelachse 22 und der Hinterachse 24 weist das Fahrgestell 16 im Bereich zwischen der Mittelachse 22 und der Hinterachse 24 einen telekopierbaren Rahmenabschnitt 34 auf. In der Darstellung der Fig. 1 ist der teleskopierbare Rahmenabschnitt 34 komplett zusammengeschoben abgebildet, so dass die Mittelachse 22 und die Hinterachse 24 eine minimale Distanz 36 zueinander aufweisen. Die Auflagefläche 26 der Transportbereich 18 weist ebenfalls einen teleskopierbaren Auflageabschnitt 38 auf, mittels wessen die Auflagefläche 26 bei Bedarf vergrößert werden kann.

In der weiteren schematischen Seitenansicht der Fig. 2 ist das Transportfahrzeug 10 in einer Beladephase dargestellt, bei welcher die Auflagefläche 26 des Transportbereichs 18 eine nach hinten geschobene und nach hinten abgekippte und damit gleichzeitig als Auffahrrampe für ein Fahrzeug 12 dienende Laderampe 40 ausbildet. Um das Transportfahrzeug 10 mit einem fahrtüchtigen Kraftfahrzeug 12 beladen zu können, kann die Auflagefläche 26 des Transportbereichs 18 derartig verschwenkt werden, dass eine Laderampe 40 zum Auffahren auf den Transportbereich 18 entsteht. Zu diesem Zweck ist die Auflagefläche 26 verschiebbar auf einem Tragrahmen 42 angeordnet. Der Tragrahmen 42 ist heckseitig an einer Schwenkachse 46 gelagert und kann im vorderen Bereich mit Hilfe eines Hubzylinders 44 nach oben geschwenkt werden. Durch die verschiebbare Lagerung der Auflagefläche 26 auf dem Tragrahmen 42 kann die Auflagefläche 26 in geschwenktem Zustand in Richtung des Bodens 32 geschoben werden, wodurch eine Laderampe 40 gebildet wird, welche einen Neigungswinkel β ausbildet. Um auch Kraftfahrzeuge 12 auf die Laderampe 40 befördern zu können, welche lediglich eine geringe Bodenfreiheit 48 aufweisen, kann die Auflagefläche 26 mit Hilfe des teleskopierbaren Auflageabschnitts 38 verlängert werden. Zudem kann der Hubzylinder 44 einen geringeren Hub umfassen, sodass eine Laderampe 40 entstehen kann, welche einen Neigungswinkel α < β aufweist (kleinerer Winkel α hier nicht gezeigt).

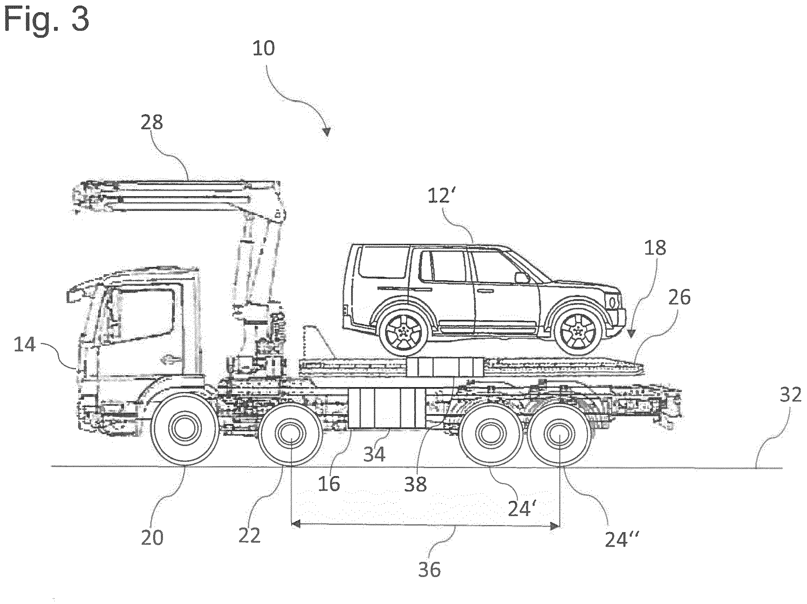

In der weiteren schematischen Seitenansicht der Fig. 3 ist eine mit einem Kraftfahrzeug 12' beladene alternative Variante des Transportfahrzeuges 10 abgebildet. Diese Variante des Transportfahrzeuges 10 weist eine hintere bzw. heckseitige Zwillingsachse 24', 24" auf. Die Zwillingsachse 24', 24" bietet den Vorteil, dass eine höhere Achslast auf der Hinterachse 24 gegenüber einer einzelnen Achse bereitgestellt werden kann. Zudem erhält das Transportfahrzeug 10 durch die Zwillingsachse 24', 24" eine größere Fahrstabilität. In Fig. 3 ist der teleskopierbare Rahmenabschnitt 34 komplett zusammengeschoben abgebildet, so dass die Mittelachse 22 und die hintere Achse 24" der Zwillingsachse 24', 24" eine minimale Distanz 36 (sog. Radstand oder Achsabstand) zueinander aufweisen. Der teleskopierbare Auflageabschnitt 38 der Auflagefläche 26 des Transportbereichs 18 ist ebenfalls auf eine minimale Fläche zusammen geschoben, um ein einzelnes Kraftfahrzeug 12 aufnehmen zu können. Da es sich im gezeigten Ausführungsbeispiel bei dem Kraftfahrzeug 12 um ein rangierunfähiges Kraftfahrzeug 12' handeln soll, ist die Verstellung der Auflagefläche 26 zu einer Laderampe 40 unnötig. Die Beladung des Transportfahrzeugs 10 mit dem Kraftfahrzeug 12' kann in diesem Fall mit Hilfe des Bergekrans 28 erfolgen.

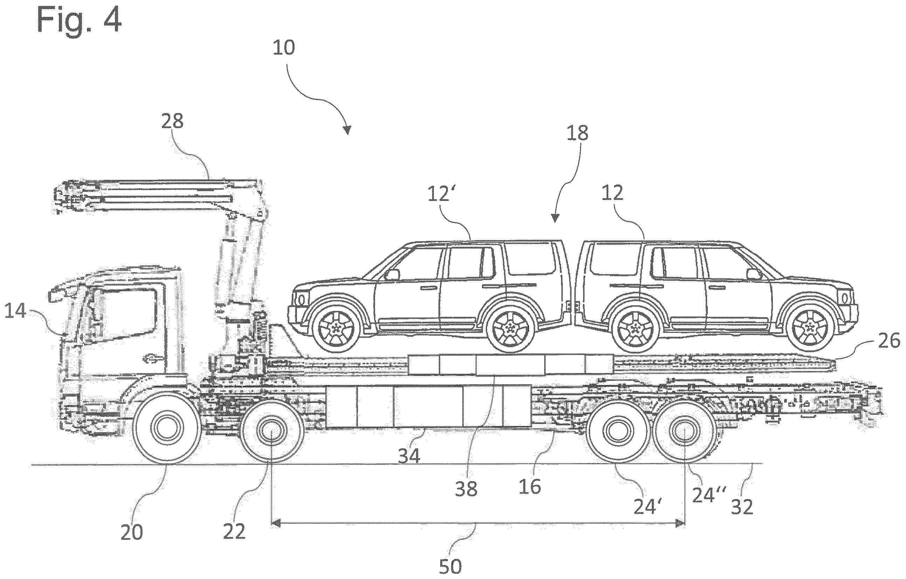

Die schematische Seitenansicht der Fig. 4 zeigt das Transportfahrzeug 10 gemäß Fig. 3 mit hinterer Zwillingsachse 24', 24", welches mit zwei Kraftfahrzeugen 12, 12' beladen ist und bei dem daher das teleskopierte Fahrgestell 16 auf maximale Länge gebracht ist. Wie das in Fig. 3 abgebildete Transportfahrzeug 10 weist das Transportfahrzeug 10 gemäß Fig. 4 eine als Zwillingsachse 24', 24" ausgebildete Hinterachse 24 auf. Da das Transportfahrzeug in diesem Fall für einen Transport von zwei Kraftfahrzeugen 12, 12' vorgesehen ist, ist das Fahrgestell 16 mit Hilfe des teleskopierbaren Rahmenabschnitts 34 derartig verlängert, dass die Mittelachse 22 und die Hinterachse 24 eine maximale Distanz 50 bzw. einen maximalen Achsabstand (zwischen der Mittelachse 22 und der hinteren Achse 24" der Zwillingsachse) zueinander aufweisen. Zur Vereinfachung von Rangiervorgängen kann die Hinterachse 24 sinnvollerweise als eine lenkbare Achse ausgebildet sein, welche mit der lenkbaren Vorderachse 20 bzw. den Lenkbefehlen der lenkbaren Vorderachse 20 gekoppelt ist. Die derartige Ausbildung der lenkbaren Hinterachse 24 erlaubt gegensinnige Lenkbewegungen der Hinterachse 24 zu den Lenkbewegungen der Vorderachse 20, wodurch Verspannungen beim Kurvenfahren vermieden und generell das Kurvenfahren erleichtert sowie der Wendekreis reduziert werden. Um einen Transportbereich 18 zu schaffen, welcher für eine Aufnahme von zwei Kraftfahrzeugen 12, 12' geeignet ist, ist die Auflagefläche 26 mit Hilfe des teleskopierbaren Auflageabschnitts 38 auf eine maximale Fläche auseinander geschoben. Eine Beladung des Ladebereichs 18 mit dem rangierunfähigen Kraftfahrzeug 12' kann mit Hilfe des Bergekrans 28 erfolgen. Über eine Laderampe 40, welche entsprechend in Fig. 2 abgebildet ist, kann das fahrtüchtige Kraftfahrzeug 12 auf den Ladebereich aufgenommen werden.

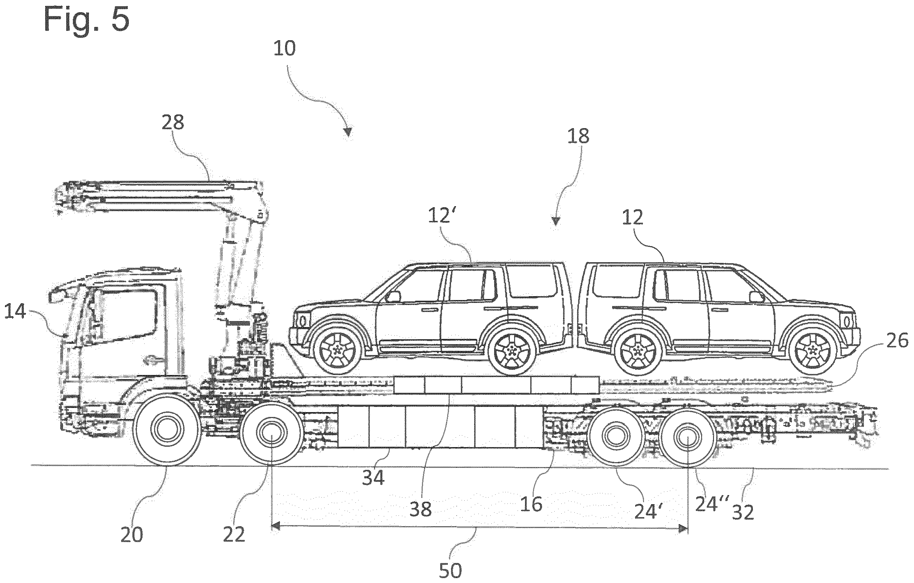

Das in Fig. 5 dargestellte Transportfahrzeug 10 umfasst einen der Fig. 4 entsprechenden Aufbau. Lediglich weist das Transportfahrzeug 10 einen in Niederflurbauweise ausgebildeten Transportbereich 18 auf. Die hinteren Räder der Mittelachse 22 und der hinteren Zwillingsachse 24' und 24" sind hierbei im Durchmesser kleiner gewählt als bei den zuvor gezeigten Varianten, wodurch auch der Transportbereich 18 niedriger gesetzt werden kann.

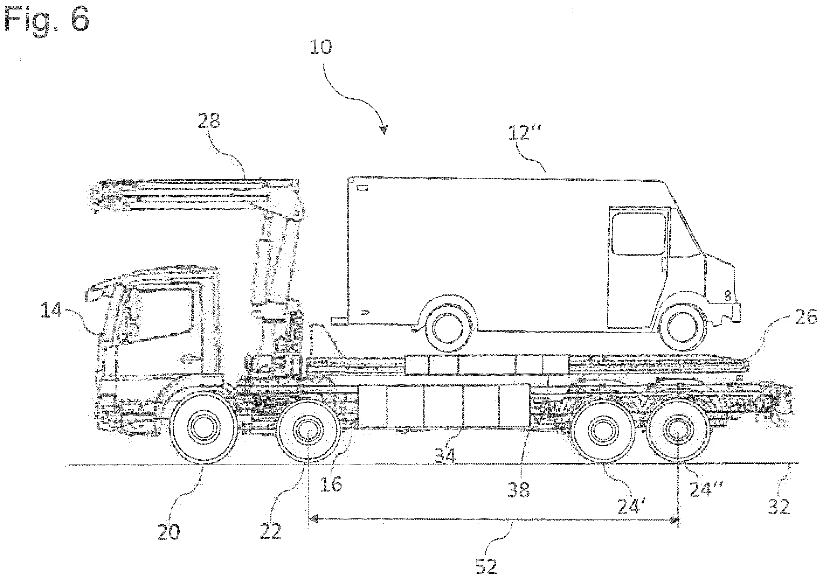

In Fig. 6 ist ein Transportfahrzeug 10 abgebildet, welches einen Kleintransporter 12" geladen hat. Da der Transporter 12" größere Ausmaße als ein gewöhnliches Kraftfahrzeug 12 bzw. ein gewöhnlicher PKW hat, ist das Fahrgestell 16 mittels des teleskopierbaren Fahrgestellabschnitts 34 auf eine mittlere Distanz 52 zwischen der Mittelachse 22 und der Hinterachse 24 ausgefahren. Die Auflagefläche 26 ist mit Hilfe des teleskopierbaren Auflageabschnitts 38 ebenfalls auf eine hiermit korrespondierende mittlere Größe ausgefahren.

Ergänzend zu erwähnen ist, dass alle Ausführungsvarianten des Transportfahrzeuges 10 gemäß den Figuren 1 bis 6 in aller Regel eine angetriebene Mittelachse 22 aufweisen, die zudem in aller Regel keine eigene Lenkung aufweisen muss, jedoch wahlweise gelenkt sein kann - und zwar gleichsinnig zur in allen Fällen gelenkten Vorderachse 20. Die schematischen Seitenansichten der Figuren 1 bis 6 lassen erkennen, dass die angetriebene Mittelachse 22 einen wesentlichen Anteil der entstehenden Achslasten bei beladenem Transportfahrzeug 10 aufnehmen kann, was ansonsten, d.h. bei fehlender Mittelachse 22, zu einer sehr hohen Achsbelastung für die gelenkte Vorderachse 20 führen würde, was ggf. sogar deren zulässige Traglast überschreiten könnte. Ein weiterer wesentlicher Vorteil der angetriebenen Mittelachse 22 besteht darin, dass damit die Hinterachse 24 bzw. die Zwillingsachse 24', 24" keinen Achsantrieb benötigt, was aufgrund einer notwendigerweise teleskopierbaren Kardanwelle bzw. Antriebswelle zur Hinterachse 24 bzw. zur hinteren Zwillingsachse 24', 24" zu einem erheblichen zusätzlichen Konstruktionsaufwand führen würde. Demgegenüber kann die Hinterachse 24 bzw. die hintere Zwillingsachse 24', 24" beim erfindungsgemäßen Transportfahrzeug 10 eine passive, nicht angetriebene Achse sein, die lediglich Spurführungs- und Lasttrageaufgaben zu übernehmen hat. Wie erwähnt, kann die Spurführungsaufgabe ggf. dadurch besser erfüllt sowie die Manövrierbarkeit dadurch verbessert werden, indem die Räder der Hinterachse 24 bzw. Zwillingsachse 24' und 24" passiv oder aktiv gelenkt sind, sinnvollerweise mit gegensinnigem Lenkeinschlag zur Vorderachse 20.

Die teleskopierbaren Rahmenabschnitte 34 können bspw. mit Hilfe von linear verschiebbaren Rahmenabschnitten, denen hydraulische Verstellmittel o. dgl. zugeordnet sind, in der Länge verstellt werden, wobei sicherzustellen ist, dass der Rahmen 16 hierbei keinen Durchbiegungen oder Torsionen unterliegt, abgesehen von den erwünschten Elastizitäten, die für solche Fahrzeuge in Leiterrahmenbauweise zur Vermeidung von Materialbrüchen und unzulässig hohen Belastungen, insbesondere beim Überwinden größerer Bodenunebenheiten unverzichtbar sind.

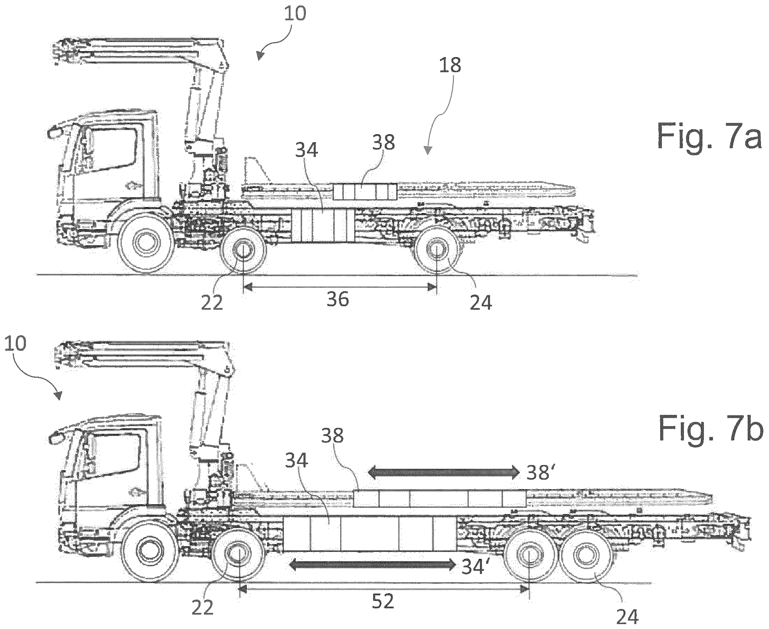

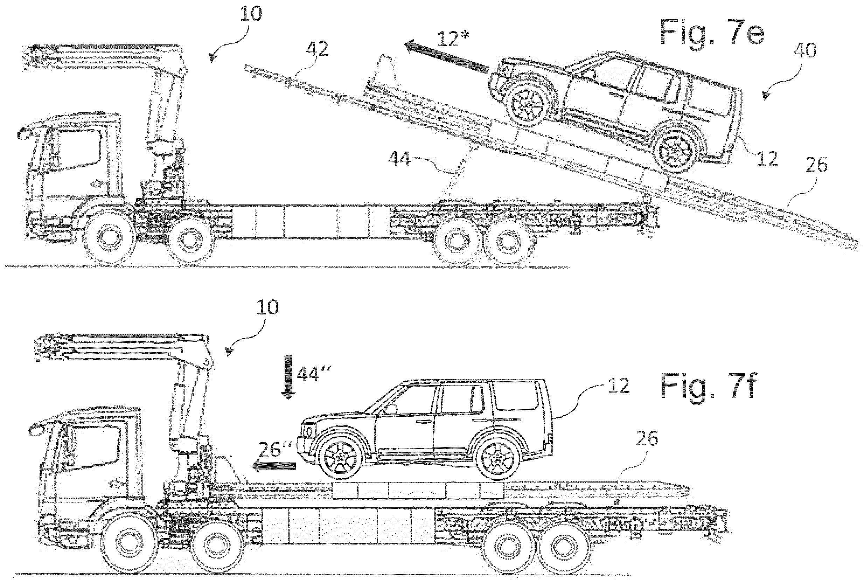

Durch die Fig. 7a bis 7f sollen die einzelnen Schritte des erfindungsgemäßen Verfahrens zum Beladen des Transportfahrzeugs beschrieben werden. So zeigt Fig. 7a ein Transportfahrzeug 10 in einem Zustand, bei welchem die Mittelachse 22 und die Hinterachse 24 eine möglichst minimale Distanz 36 zueinander aufweisen (vgl. beispielsweise Fig. 1). Der telekopierbare Rahmenabschnitt 34 sowie der telekopierbare Auflageabschnitt 38 sind nicht ausgefahren. Dieser Zustand ist zum Beispiel für die Anreise zu einem Einsatzort ideal. Um ein einzelnes Kraftfahrzeug 12 oder mehrere Kraftfahrzeuge 12 auf den Transportbereich laden zu können, kann zunächst der telekopierbare Rahmenabschnitt 34 sowie der telekopierbare Auflageabschnitt 38 ausgefahren werden, sodass sich sowohl die Distanz 52 zwischen der Mittelachse 22 und der Hinterachse 24 vergrößern kann, wie auch die Auflagefläche 26 des Transportbereichs 18. Dieser Zustand ist bei dem Transportfahrzeug 10 der Fig. 7b gezeigt. Die Bezugszeichen 34' und 38' symbolisieren das Ausfahren des telekopierbaren Rahmenabschnitts 34 und des telekopierbaren Auflageabschnitts 38. Der telekopierbare Rahmenabschnitt 34 und der telekopierbare Auflageabschnitt 38 können miteinander gekoppelt sein, sodass ein Ausfahren der beiden Abschnitte 34 und 38 zeitgleich und automatisch erfolgen kann.

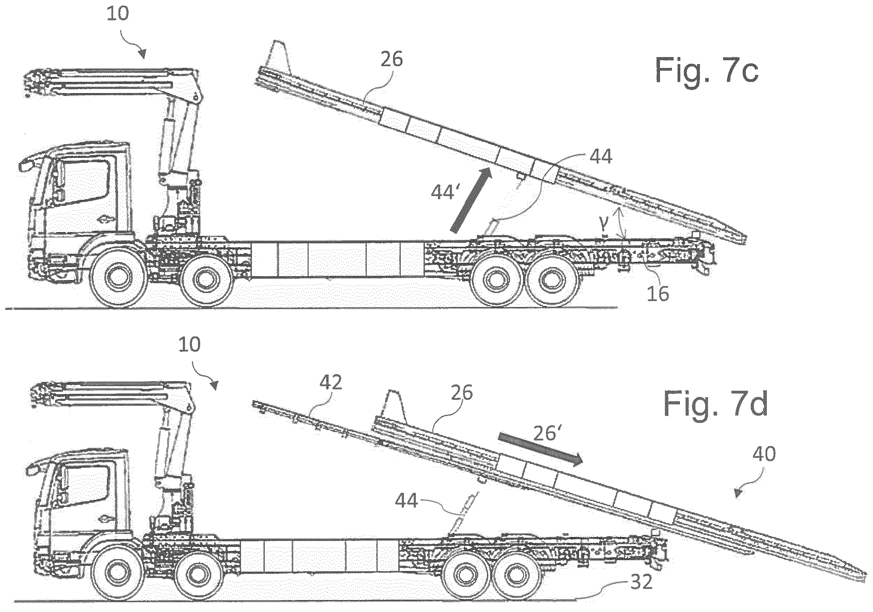

Im folgenden Schritt, welcher in Fig. 7c gezeigt ist, wird durch Ausfahren (vgl. 44') des Hubzylinders 44 der Tragrahmen 42, und somit die Auflagefläche 26 angehoben, sodass diese in einem vorgesehenen Winkel γ zu dem Fahrgestell 16 des Transportfahrzeugs 10 steht. Anschließend kann die Auflagefläche 26 aufgrund der verschiebbaren Lagerung auf dem Tragrahmen 42 nach hinten geschoben werden (vgl. 26'), sodass sich die Auflagefläche 26 dem Boden 32 nähert und eine befahrbare Laderampe 40 entsteht. Die Abfolge der Schritte aus den Fig. 7c und 7d kann wahlweise auch vertauscht werden. Über die Laderampe 40 können sodann Kraftfahrzeuge 12 auf die Auflagefläche gefahren bzw. bewegt (vgl. 12*) werden, wie Fig. 7e zeigt. Anschließend soll die Auflagefläche 26 des Transportbereichs 18 durch Einfahren des Hubzylinders 44 in die horizontale Ausgangsposition zurückverfahren werden (vgl. 44"). Auch die Auflagefläche 26 kann anschließend über die verschiebbare Lagerung auf dem Tragrahmen 42 in die ursprüngliche Lagerposition zurück bewegt werden, wie der Pfeil 26" verdeutlicht. Nach Beenden des Schrittes der Fig. 7e kann das Kraftfahrzeug 12 abtransportiert werden.

Die Erfindung wurde unter Bezugnahme auf die in den Figuren 1 bis 7f dargestellten bevorzugten Ausführungsvarianten beschrieben. Es ist jedoch für einen Fachmann vorstellbar, dass Abwandlungen oder Änderungen der Erfindung gemacht werden können, ohne dabei den Schutzbereich der nachstehenden Ansprüche zu verlassen.

### Bezugszeichenliste

- 10: Transportfahrzeug
- 12: fahrtüchtiges Kraftfahrzeug
- 12': rangierunfähiges Kraftfahrzeug
- 12": Kraftfahrzeug, Kleintransporter
- 12*: Bewegen des Kraftfahrzeugs auf die Auflagefläche
- 14: Führerhaus
- 16: Fahrgestell
- 18: Transportbereich
- 20: Vorderachse
- 22: Mittelachse
- 24: Hinterachse
- 24',24": Zwillingsachse
- 26: Auflagefläche
- 26': Nach hinten Schieben der Auflagefläche
- 26": Zurückschieben der Auflagefläche
- 28: Bergekran
- 30: Abstand zwischen Fahrgestellunterseite und Boden, Bodenfreiheit
- 32: Boden
- 34: teleskopierbarer Rahmenabschnitt
- 34': Ausfahren des teleskopierbaren Rahmenabschnitts
- 36: minimale Distanz, Radstand, Achsabstand
- 38: teleskopierbarer Auflageabschnitt
- 38': Ausfahren des teleskopierbaren Auflageabschnitts
- 40: Laderampe
- 42: Tragrahmen
- 44: Hubzylinder
- 44': Ausfahren des Hubzylinders
- 44": Einfahren des Hubzylinders
- 46: Schwenkachse
- 48: Bodenfreiheit
- 50: maximale Distanz
- 52: mittlere Distanz

## Patentansprüche

1. Transportfahrzeug (10) zur Beförderung von rollbaren Gütern oder Fahrzeugen, insbesondere von Kraftfahrzeugen (12, 12', 12"), Personenkraftwagen oder dgl., mit mindestens drei an einem Fahrgestell (16) des Transportfahrzeugs (10) angeordneten Achsen (20, 22, 24, 24', 24"), mit einem frontseitig oberhalb einer lenkbaren Vorderachse (20) angeordneten Führerhaus (14) sowie einem zumindest teilweise dem Fahrgestell (16) zugeordneten Transportbereich (18) mit einer Auflagefläche (26) für die zu transportierenden rollbaren Güter oder Fahrzeuge, wobei das Fahrgestell (16) Verstellmittel zur Verstellung einer Distanz zwischen einer Mittelachse (22) des Transportfahrzeuges (10) und wenigstens einer Hinterachse (24, 24', 24") aufweist, und wobei die Auflagefläche (26) des Transportbereichs (18) gegenüber dem Fahrgestell (16) verstellbar und/oder verschiebbar und/oder verschwenkbar ist.

2. Transportfahrzeug (10) nach Anspruch 1, bei dem der Transportbereich (18) zumindest teilweise starr auf dem Fahrgestell (16) angeordnet ist.

3. Transportfahrzeug nach Anspruch 1 oder 2, bei dem die Distanz (36, 50, 52) zwischen der Mittelachse (22) und der Hinterachse (24, 24', 24") mittels teleskopierbarer Verstellmittel, insbesondere mittels teleskopierbarer Rahmenabschnitte (34) verstellbar ist.

4. Transportfahrzeug nach einem der Ansprüche 1 bis 3, bei dem die Mittelachse (22) und die Hinterachse (24, 24', 24") eine minimale Distanz (36), eine maximale Distanz (50) oder eine mittlere Distanz (52) zueinander aufweisen.

5. Transportfahrzeug nach einem der Ansprüche 1 bis 4, bei dem die Auflagefläche (26) des Transportbereichs (18) mittels teleskopierbarer Verstellmittel (38) in seiner Länge verstellbar ist.

6. Transportfahrzeug nach Anspruch 5, bei dem eine Verstellung der Auflagefläche (26) des Transportbereichs (18) an eine Verstellung der Distanz (36, 50, 52) zwischen der Mittelachse (22) und der Hinterachse (24, 24', 24") mittels der teleskopierbaren Verstellmittel, insbesondere mittels der teleskopierbaren Rahmenabschnitte (34) gekoppelt ist.

7. Transportfahrzeug nach Anspruch 5, bei dem eine Verstellung der Auflagefläche (26) des Transportbereichs (18) unabhängig einer Verstellung der Distanz (36, 50, 52) zwischen Mittelachse (22) und Hinterachse (24, 24', 24") durchführbar ist.

8. Transportfahrzeug nach einem der Ansprüche 1 bis 7, das wenigstens einen am Fahrgestell (16) verankerten Bergekran (28) umfasst.

9. Transportfahrzeug nach einem der Ansprüche 1 bis 8, dessen Hinterachse (24) als Zwillingsachse (24', 24") ausgebildet ist.

10. Transportfahrzeug nach einem der Ansprüche 1 bis 9, dessen Mittelachse (22) eine angetriebene Mittelachse (22) ist.

11. Transportfahrzeug nach einem der Ansprüche 1 bis 10, dessen Hinterachse (24, 24', 24") aktiv oder passiv lenkbar ausgestaltet ist.

12. Transportfahrzeug nach Anspruch 11, bei dem ein Lenkeinschlag der lenkbaren Hinterachse (24, 24', 24") gegensinnig an einen Lenkeinschlag der Vorderachse (20) gekoppelt ist.

13. Verfahren zum Beladen eines Transportfahrzeugs (10) zur Beförderung von rollbaren Gütern oder Fahrzeugen, insbesondere von Kraftfahrzeugen (12, 12', 12"), Personenkraftwagen oder dgl., mit mindestens drei an einem Fahrgestell (16) des Transportfahrzeugs (10) angeordneten Achsen (20, 22, 24, 24', 24"), mit einem frontseitig oberhalb einer lenkbaren Vorderachse (20) angeordneten Führerhaus (14) sowie einem zumindest teilweise dem Fahrgestell (16) zugeordneten Transportbereich (18) mit einer Auflagefläche (26) für die zu transportierenden rollbaren Güter oder Fahrzeuge, wobei das Fahrgestell (16) Verstellmittel zur Verstellung einer Distanz zwischen einer Mittelachse (22) des Transportfahrzeuges (10) und wenigstens einer Hinterachse (24, 24', 24") aufweist; umfassend zumindest folgende Schritte:
- Vergrößern der Distanz zwischen der Mittelachse (22) und der wenigstens einen Hinterachse (24, 24', 24") des Transportfahrzeugs (10) mittels Ausfahren teleskopierbarer Verstellmittel (34) des Fahrgestells (16),
- Vergrößern der Auflagefläche (26) des Transportbereichs (18) mittels Ausfahren teleskopierbarer Verstellmittel (38),
- Verschieben der Auflagefläche (26) des Transportbereichs (18) nach hinten sowie nach hinten Kippen der Auflagefläche (26) zur Bildung einer Laderampe (40),
- Auffahren zu transportierender rollbarer Güter oder Fahrzeuge (12) auf die Laderampe (40),
- Zurückschwenken der Auflagefläche (26) des Transportbereichs (18) in eine horizontale Ausgangsposition und Zurückbewegen der Auflagefläche (26) in eine ursprüngliche Lagerposition.

14. Verfahren nach Anspruch 13, wobei die Vergrößerung der Distanz zwischen der Mittelachse (22) und der wenigstens einen Hinterachse (24, 24', 24") des Transportfahrzeugs (10) mit der Vergrößerung der Auflagefläche (26) des Transportbereichs (18) gekoppelt ist.

## Claims

1. A transport vehicle (10) used for the transport of rollable goods or vehicles, in particular, of motor vehicles (12, 12', 12"), passenger vehicles, or the like, with at least three axles (20, 22, 24, 24', 24") arranged on a chassis (16) of the transport vehicle (10); with a driver's cab (14) arranged at the front end above a steerable front axle (20); as well as with a transport area (18) at least partly assigned to the chassis (16), the transport area (18) having a support surface (26) for the rollable goods or vehicles to be transported, wherein the chassis (16) has adjustment means used for the adjustment of a distance between a centre axle (22) of the transport vehicle (10) and at least one rear axle (24, 24', 24"), and wherein the support surface (26) of the transport area (18) is adjustable and/or slidable and/or swivelable in relation to the chassis (16).

2. The transport vehicle (10) according to claim 1, in which the transport area (18) is arranged on the chassis (16) in an at least partly rigid manner.

3. The transport vehicle according to claim 1 or 2, in which the distance (36, 50, 52) between the centre axle (22) and the rear axle (24, 24', 24") is adjustable by means of telescopic adjustment means, in particular, by means of telescopic frame sections (34).

4. The transport vehicle according to one of the claims 1 to 3, in which the centre axle (22) and the rear axle (24, 24', 24") have a minimum distance (36), a maximum distance (50), or a medium distance (52) to each other.

5. The transport vehicle according to one of the claims 1 to 4, in which the support surface (26) of the transport area (18) is adjustable in its length by means of telescopic adjustment means (38).

6. The transport vehicle according to claim 5, in which an adjustment of the support surface (26) of the transport area (18) is coupled to an adjustment of the distance (36, 50, 52) between the centre axle (22) and the rear axle (24, 24', 24") by means of telescopic adjustment means, in particular, by means of the telescopic frame sections (34).

7. The transport vehicle according to claim 5, in which an adjustment of the support surface (26) of the transport area (18) is performable independently of an adjustment of the distance (36, 50, 52) between centre axle (22) and rear axle (24, 24', 24").

8. The transport vehicle according to one of the claims 1 to 7, which comprises at least one rescue crane (28) anchored to the chassis (16).

9. The transport vehicle according to one of the claims 1 to 8, the rear axle (24) of which is designed as twin axle (24', 24").

10. The transport vehicle according to one of the claims 1 to 9, the centre axle (22) of which is a driven centre axle (22)

11. The transport vehicle according to one of the claims 1 to 10, the rear axle (24, 24', 24") of which is designed to be actively or passively steerable.

12. The transport vehicle according to claim 11, in which a steer angle of the steerable rear axle (24, 24', 24") is inversely coupled to a steer angle of the front axle (20).

13. A method used to load a transport vehicle (10) for the transport of rollable goods or vehicles, in particular, of motor vehicles (12, 12', 12"), passenger vehicles, or the like, with at least three axles (20, 22, 24, 24', 24") arranged on a chassis (16) of the transport vehicle (10); with a driver's cab (14) arranged at the front end above a steerable front axle (20); as well as with a transport area (18) at least partly assigned to the chassis (16), the transport area (18) having a support surface (26) for the rollable goods or vehicles to be transported, wherein the chassis (16) has adjustment means used for the adjustment of a distance between a centre axle (22) of the transport vehicle (10) and at least one rear axle (24, 24', 24"); the method comprising at least following steps:
- increasing the distance between the centre axle (22) and the at least one rear axle (24, 24', 24") of the transport vehicle (10) by means of extending telescopic adjustment means (34) of the chassis (16);
- increasing the support surface (26) of the transport area (18) by means of extending telescopic adjustment means (38);
- sliding the support surface (26) of the transport area (18) rearward, as well as tilting the support surface (26) rearward to form a loading ramp (40);
- driving rollable goods or vehicles (12) to be transported up onto the loading ramp (40);
- swivelling the support surface (26) of the transport area (18) back into a horizontal starting position; and moving the support surface (26) back into an original, bedded position.

14. The method according to claim 13, wherein the increasing of the distance between the centre axle (22) and the at least one rear axle (24, 24', 24") of the transport vehicle (10) is coupled with the increasing of the support surface (26) of the transport area (18).

## Revendications

1. Véhicule de transport (10) pour le convoyage de biens ou véhicules roulants, notamment de véhicules automobiles (12, 12', 12"), de voitures personnelles ou équivalents, doté d'au moins trois essieux (20, 22, 24, 24', 24") agencés sur un châssis (16) du véhicule de transport (10), doté d'une cabine (14) agencée à l'avant au-dessus d'un essieu avant (20) directeur ainsi que d'une zone de transport (18) associée au moins partiellement au châssis (16), avec une surface d'appui (26) pour les biens ou véhicules roulants à transporter, le châssis (16) présentant des moyens de réglage pour régler une distance entre un essieu médian (22) du véhicule de transport (10) et au moins un essieu arrière (24, 24', 24"), et la surface d'appui (26) de la zone de transport (18) étant réglable et/ou déplaçable et/ou pivotante par rapport au châssis (16).

2. Véhicule de transport (10) selon la revendication 1, dans lequel la zone de transport (18) est agencée au moins de manière partiellement rigide sur le châssis (16).

3. Véhicule de transport selon la revendication 1 ou 2, dans lequel la distance (36, 50, 52) entre l'essieu médian (22) et l'essieu arrière (24, 24', 24") est réglable à l'aide de moyens de réglage télescopiques, notamment à l'aide de portions de cadres (34) télescopiques.

4. Véhicule de transport selon l'une quelconque des revendications 1 à 3, dans lequel l'essieu médian (22) et l'essieu arrière (24, 24', 24") présentent une distance minimale (36), une distance maximale (50) ou une distance moyenne (52) les uns par rapport aux autres.

5. Véhicule de transport selon l'une quelconque des revendications 1 à 4, dans lequel la surface d'appui (26) de la zone de transport (18) est réglable en longueur à l'aide de moyens de réglage (38) télescopiques.

6. Véhicule de transport selon la revendication 5, dans lequel un réglage de la surface d'appui (26) de la zone de transport (18) est couplé à un réglage de la distance (36, 50, 52) entre l'essieu médian (22) et l'essieu arrière (24, 24', 24") à l'aide des moyens de réglage télescopiques, notamment à l'aide de portions de cadre (34) télescopiques.

7. Véhicule de transport selon la revendication 5, dans lequel un réglage de la surface d'appui (26) de la zone de transport (18) peut être exécuté indépendamment d'un réglage de la distance (36, 50, 52) entre l'essieu médian (22) et l'essieu arrière (24, 24', 24").

8. Véhicule de transport selon l'une quelconque des revendications 1 à 7 qui comprend au moins une grue de secours (28) solidarisée avec le châssis (16).

9. Véhicule de transport selon l'une quelconque des revendications 1 à 8, dont l'essieu arrière (24) est réalisé sous la forme d'un essieu jumelé (24', 24").

10. Véhicule de transport selon l'une quelconque des revendications 1 à 9, dont l'essieu médian (22) est un essieu médian entraîné (22).

11. Véhicule de transport selon l'une quelconque des revendications 1 à 10, dont l'essieu arrière (24, 24', 24") est réalisé directeur actif ou passif.

12. Véhicule de transport selon la revendication 11, dans lequel un braquage de direction de l'essieu arrière directeur (24, 24', 24") est couplé en sens inverse à un braquage de direction de l'essieu avant (20).

13. Procédé de chargement d'un véhicule de transport (10) pour le convoyage de biens ou véhicules roulants, notamment de véhicules automobiles (12, 12', 12"), voitures personnelles ou équivalents, doté d'au moins trois essieux (20, 22, 24, 24', 24") agencés sur un châssis (16) du véhicule de transport (10), doté d'une cabine (14) agencée à l'avant au-dessus d'un essieu avant (20) directeur ainsi que d'une zone de transport (18) associée au moins partiellement au châssis (16), avec une surface d'appui (26) pour les biens ou véhicules roulants à transporter, le châssis (16) présentant des moyens de réglage pour régler une distance entre un essieu médian (22) du véhicule de transport (10) et au moins un essieu arrière (24, 24', 24") ; comprenant au moins les étapes suivantes :
- augmenter la distance entre l'essieu médian (22) et ledit au moins un essieu arrière (24, 24', 24") du véhicule de transport (10) en faisant sortir (16) les moyens de réglage (34) télescopiques du châssis ;
- agrandir la surface d'appui (26) de la zone de transport (18) en faisant sortir les moyens de réglage (38) télescopiques ;
- déplacer vers l'arrière la surface d'appui (26) de la zone de transport (18) ainsi que faire basculer vers l'arrière la surface d'appui (26) pour former une rampe de chargement (40) ;
- faire monter les biens ou véhicules roulants (12) sur la rampe de chargement (40) ;
- rebasculer la surface d'appui (26) de la zone de transport (18) dans une position horizontale initiale et replacer la surface d'appui (26) en position allongée initiale.

14. Procédé selon la revendication 13, l'augmentation de la distance entre l'essieu médian (22) et ledit au moins un essieu arrière (24, 24', 24") du véhicule de transport (10) étant couplée à l'agrandissement de la surface d'appui (26) de la zone de transport (18).
